# EUROPEAN PATENT SPECIFICATION

(11) **EP 1 388 650 B1**
(45) Date of publication and mention of the grant of the patent: **21.02.2007**
(21) Application number: 02707222.2
(22) Date of filing: 28.03.2002
(51) Int. Cl.: F01N 7/08, F01N 7/18, F01N 7/10, F16L 27/053

(54) **EXHAUST MANIFOLD COLLECTING PART CONNECTION STRUCTURE OF MULTI-CYLINDER INTERNAL COMBUSTION ENGINE**
STRUKTUR EINES ABGASKRÜMMERS EINER MEHRZYLINDRIGEN BRENNKRAFTMASCHINE
STRUCTURE DE RACCORDEMENT D'UNE PARTIE DE COLLECTEUR D'ECHAPPEMENT DE MOTEUR A COMBUSTION INTERNE A PLUSIEURS CYLINDRES

(30) Priority: 14.05.2001 JP 2001143848
(43) Date of publication of application: 11.02.2004
(73) Proprietor: HONDA GIKEN KOGYO KABUSHIKI KAISHA, Minato-ku, Tokyo 107-8556 (JP)
(72) Inventor: SOUMA, Miyuki, c/o K. K. HONDA GIJUTSU KENKYUSHO, Wako-shi, Saitama 351-0193 (JP); FURUMATA, Seiji, c/o K. K. HONDA GIJUTSU KENKYUSHO, Wako-shi, Saitama 351-0193 (JP)
(74) Representative: Prechtel, Jörg
(86) International application number: PCT/JP2002/003078
(87) International publication number: WO 2002/092973

(56) References cited:
- JP-A- 6 129 249
- JP-A- 7 224 650
- JP-A- 9 229 263
- JP-U- 4 095 617
- PATENT ABSTRACTS OF JAPAN vol. 2000, no. 04, 31 August 2000 (2000-08-31) & JP 2000 027644 A (HONDA MOTOR CO LTD), 25 January 2000 (2000-01-25)
- PATENT ABSTRACTS OF JAPAN vol. 1996, no. 12, 26 December 1996 (1996-12-26) & JP 08 200055 A (OILES IND CO LTD), 6 August 1996 (1996-08-06)
- PATENT ABSTRACTS OF JAPAN vol. 1996, no. 10, 31 October 1996 (1996-10-31) & JP 08 165921 A (YUTAKA GIKEN CO LTD), 25 June 1996 (1996-06-25)

## Description

### TECHNICAL FIELD

The present invention relates to a connecting structure for connecting an exhaust manifold for a multicylinder internal combustion engine to a flange of a spherical joint for connecting an exhaust pipe to the exhaust manifold.

### BACKGROUND ART

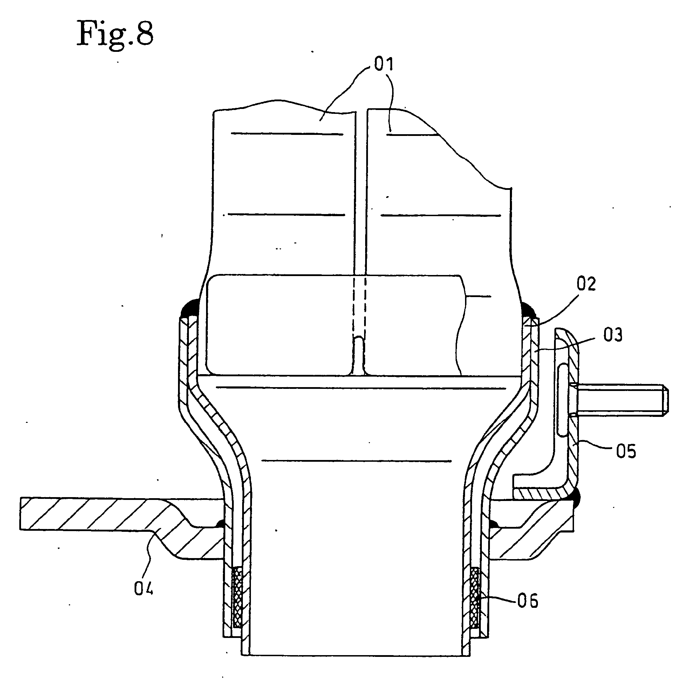

Referring to Fig. 8 showing a conventional exhaust manifold connecting structure, the upstream ends of branch tubes 01 of an exhaust manifold are connected to exhaust passages connected to the cylinders, not shown, of a multicylinder internal combustion engine. Downstream ends of the branch tubes 01 are gathered and are inserted in a manifold body 02, and the manifold body 02 is fitted in an outer pipe 03.

One flange 04 of a spherical joint is put on and welded to a part near the branch tubes 01 of the outer pipe 03. A stay 05 for holding an exhaust manifold cover, not shown, is welded to the flange 04.

A method of manufacturing the conventional exhaust manifold connecting structure shown in Fig. 8, winds a heat insulating mesh 06 around the manifold body 02, fits the manifold body 02 in the outer pipe 03, connects the manifold body 02 and the outer pipe 03 temporarily by spot welding or the like, welds the outer pipe 03 to the flange 04, gathers the four branch tubes 01 closely, inserts the gathered branch tubes 01 in the upstream end of the manifold body 02, and welds the respective brims of the manifold body 02 and the outer pipe 03, and the branch tubes 01 together. Thus, the method needs three welding processes. Therefore the method has many steps and the productivity thereof is low.

The flange 04 formed from a thick plate is heavy, has a large thermal capacity and a narrow surface area. Therefore, the flange 04 has bad heat radiating property, increases thermal load on the spherical joint, and affects adversely to the durability of gaskets.

An exhaust manifold connecting structure with the features of the preamble of claim 1 is known from JP-A-2000 027 644. This structure has an upstream flange formed as a solid steel member with large heat capacity.

JP-A-09 229 263 shows an exhaust manifold connecting structure having an upstream flange made from a sheet material. To avoid thermal damage to a gasket located between the upstream flange and a downstream flange, a gasket flange is provided which prevents direct contact of the gasket and the upstream flange.

Accordingly, it is an object of the present invention to provide an exhaust manifold connecting structure for a multicylinder internal combustion engine, capable of overcoming the foregoing disadvantages.

### DISCLOSURE OF THE INVENTION

According to the present invention, there is provided an exhaust manifold connecting structure as claimed in claim 1. A collecting pipe collectively holds branch tubes of an exhaust manifold for a multicylinder internal combustion engine. A spherical joint connects the collecting pipe and an exhaust pipe. The collecting pipe is a double-wall pipe structure including a collecting pipe body, and an outer pipe put on the collecting pipe body. A tubular connecting part of a first flange included in the spherical joint is put on the outer pipe. The collecting pipe body, the outer pipe and the tubular connecting part of the first flange are joined together by welding.

The exhaust manifold connecting structure of the present invention is fabricated by joining together the collecting pipe body, the outer pipe and the flange by a single welding process without temporarily connecting the collecting pipe body and the outer pipe, which reduces work and costs necessary for fabricating the exhaust manifold connecting structure. The outer pipe has a short length and is light.

The first flange of the spherical joint is formed by press working.

A peripheral part of the first flange may be bent toward an upstream side with respect to an exhaust direction. The thin first flange formed by press working and having the peripheral part thus bent has high strength and rigidity, which enables the further reduction of the weight of the exhaust manifold connecting structure. Since the peripheral part of the first flange is bent toward the upstream side, heat radiation from a connecting part on the side of a spherical gasket can be enhanced, heat radiating area can be increased to enhance heat radiation, and the durability of the spherical gasket can be improved.

The first flange of the spherical joint may have a part serving as a stay for holding an exhaust manifold cover. The exhaust manifold cover can be easily and firmly attached to the first flange to heat-insulate the exhaust manifold effectively. Thus, the number of parts of the exhaust manifold connecting structure can be further reduced and the costs can be reduced accordingly.

An annular space may be formed between the collecting pipe body and a downstream part of the outer pipe. The annular space reduces heat transfer to the gasket.

Desirably, the respective upstream parts of the collecting pipe body, the outer pipe and the tubular connecting part of the first flange are welded together.

The spherical joint is provided with a second flange opposite to the flange, and a gasket is interposed between the tubular connecting part of the first flange and a central part of the second flange so as to be fitted on a part corresponding to the annular space of the outer pipe.

The tubular connecting part of the first flange is connected to a body of the flange by its annular part radially extending from the tubular connecting part, and a taper part having the shape of a truncated cone and surrounding the tubular connecting part.

### BRIEF DESCRIPTION OF THE DRAWINGS

Fig. 1 is a side elevation of an exhaust manifold connecting structure in a preferred embodiment according to the present invention for a multicylinder internal combustion engine;
Fig. 2 is a plan view of the exhaust manifold connecting structure shown in Fig. 1;
Fig. 3 is a front view of an exhaust manifold;
Fig. 4 is a plan view of a downstream part of the exhaust manifold shown in Fig. 3 taken from above from a direction perpendicular to the center axis of the downstream part;
Fig. 5 is a view taken in the direction of the arrow V in Fig. 3;
Fig. 6 is a longitudinal sectional view taken on line VI-VI in Fig. 5;
Fig. 7 is a cross-sectional view taken on line IVII-VII in Fig. 6; and
Fig. 8 is a longitudinal sectional view of a conventional exhaust manifold connecting structure.

### BEST MODE FOR CARRYING OUT THE INVENTION

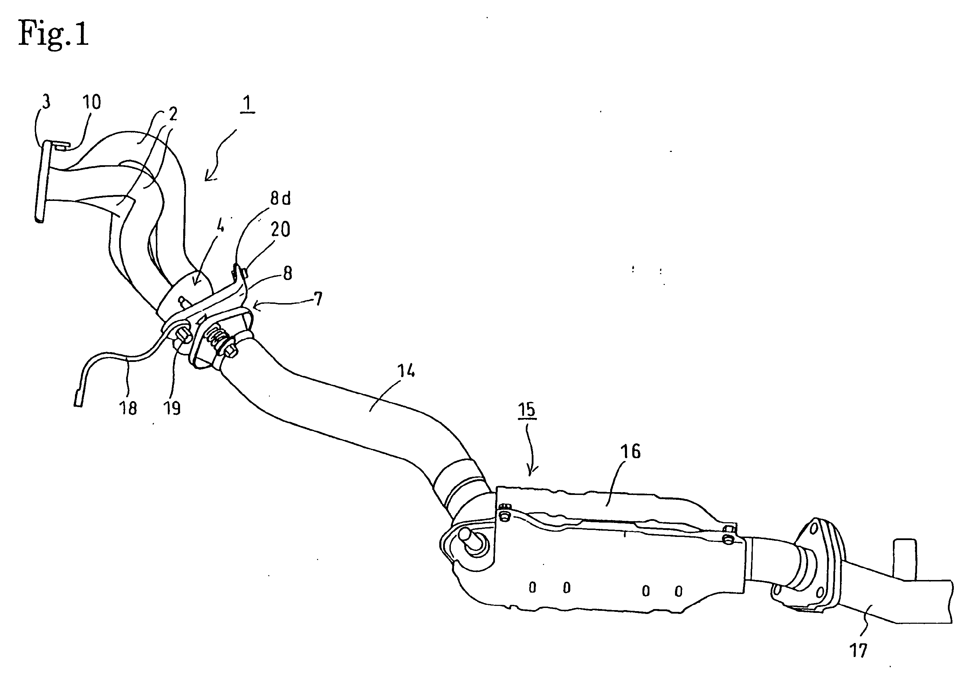

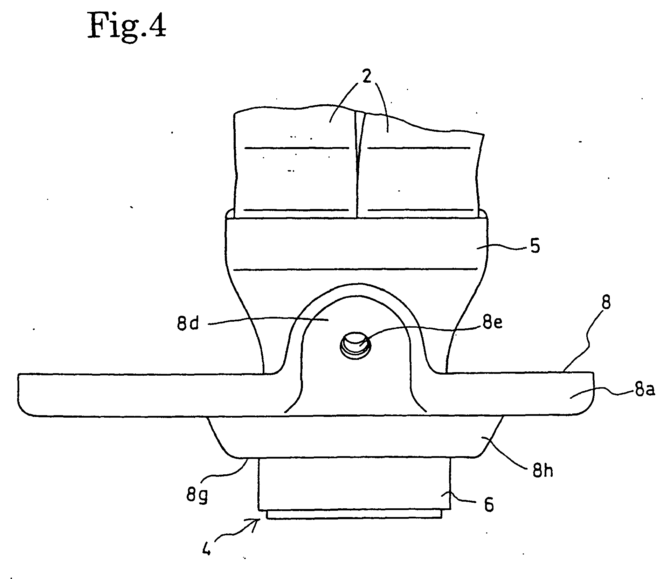

An exhaust manifold connecting structure in a preferred embodiment according to the present invention for a multicylinder internal combustion engine will be described with reference to Figs. 1 to 7.

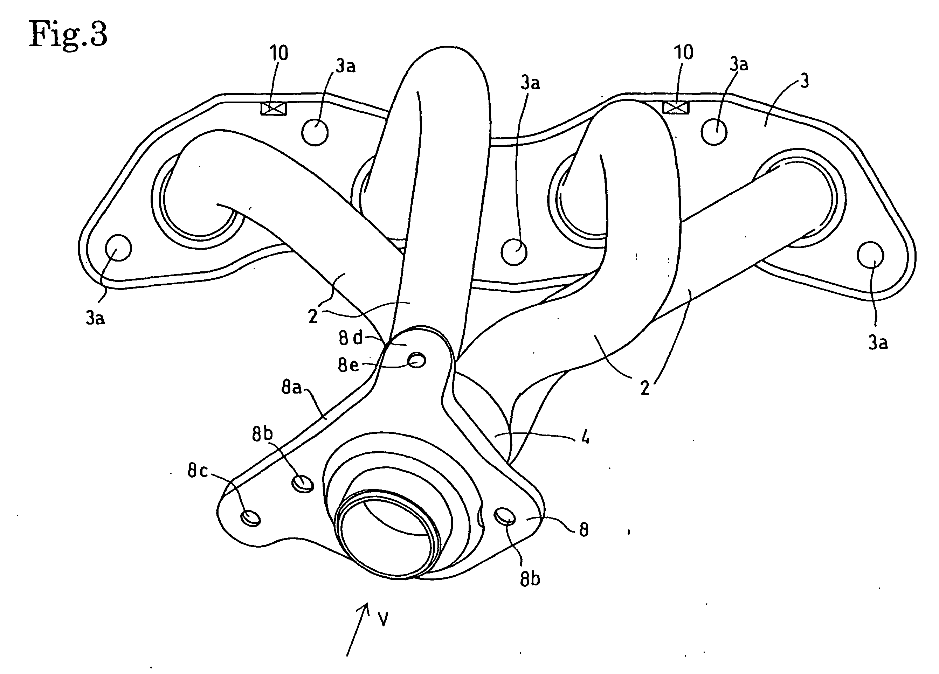

An exhaust manifold 1 has, for example, four branch tubes 2. Upstream ends of the branch tubes 2 are joined to a manifold flange 3 of a shape shown in Fig. 3 so as to be connected to openings, not shown, formed in the manifold flange 3, respectively. The manifold flange 3 is fastened to the cylinder head of a four-cylinder straight internal combustion engine mounted on a vehicle with bolts, not shown, screwed through bolt holes 3a in threaded holes formed in the cylinder head so that the four branch tubes 2 communicate with the four exhaust ports, not shown, of the cylinder head, respectively.

Downstream end parts of the branch tubes 2 of the exhaust manifold 1 are gathered in a single big pipe, and the big pipe is fitted in a collecting pipe 4. The collecting pipe 4 is connected to an upstream end part of an exhaust pipe 14 by a spherical joint 7. A downstream end part of the exhaust pipe 14 is connected to an upstream end part of a catalytic converter case 16 included in a catalytic converter 15. A downstream end part of the exhaust gas purifier case 16 is connected to a muffler, not shown, by a connecting pipe 17.

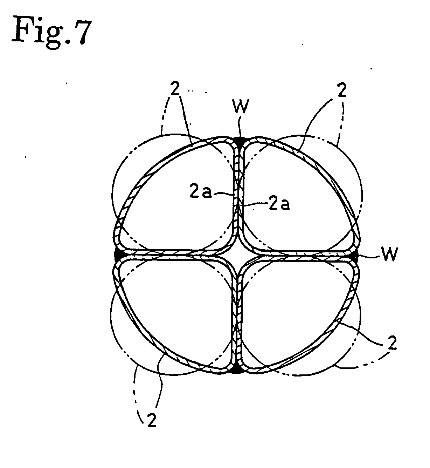

Downstream end parts of the four branch tubes 2 are shaped by drawing in a sectional shape substantially resembling a quadrant as shown in Fig. 7. The downstream end parts thus shaped of the four branch tubes 2 are gathered so that the flat walls 2a of the adjacent downstream end parts are in close contact with each other, and the downstream end parts are welded together to form the single, big pipe.

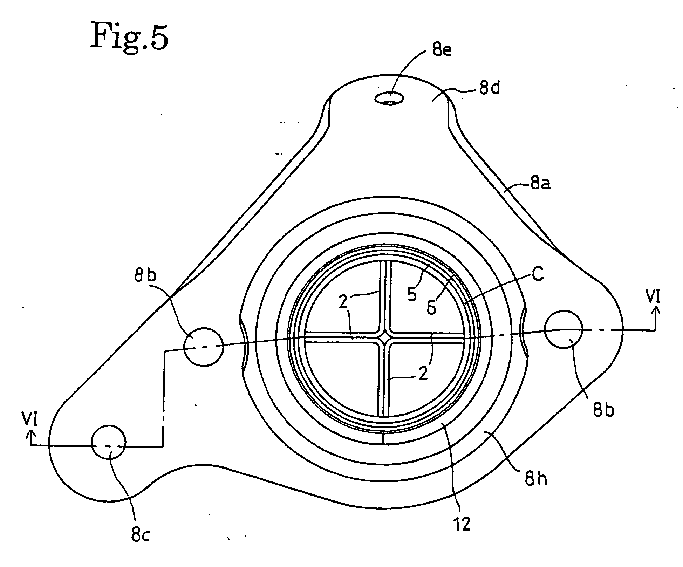

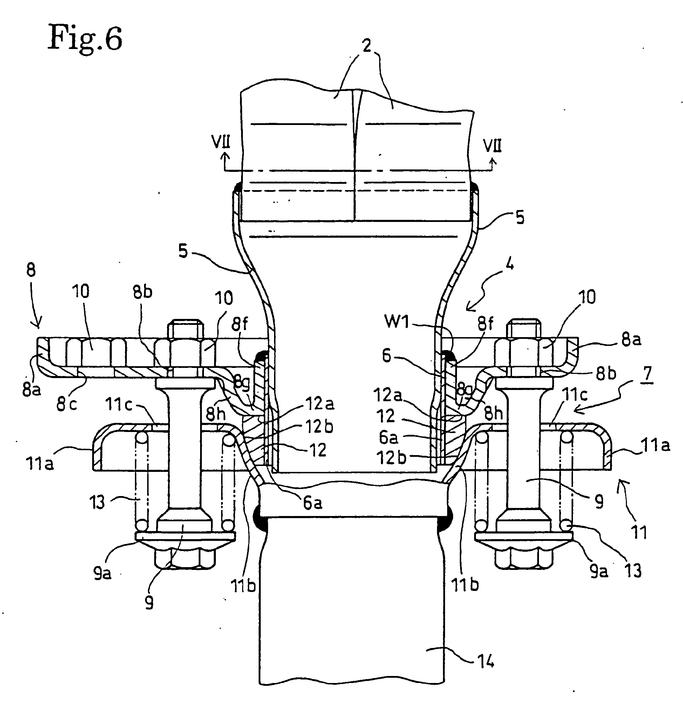

The big pipe is fitted in the collecting pipe 4. As shown in Fig. 6, the collecting pipe 4 includes a collecting pipe body 5, and an outer pipe 6 surrounding the collecting pipe body 5 so as to define an annular gap C (Fig. 5) between the collecting pipe body 5 and the outer pipe 6. The annular gap C serves as a heat insulating air layer for the collecting pipe 4. The annular gap C can be formed by reducing a downstream end part of the collecting pipe body 5.

The spherical joint 7 includes an upstream flange 8 formed by subjecting a sheet to press working. As shown in Fig. 6, the upstream flange 8 has a peripheral part 8a extending upstream substantially perpendicularly to a main part. As shown in Fig. 5, the upstream flange 8 is provided with two bolt holes 8b point-symmetrical with respect to the center axis of the collecting pipe 4, and a bolt hole 8c for fastening a stay to the upstream flange 8. A manifold cover holding part 8d provided with a bolt hole 8e is formed integrally with the upstream flange 8. As shown in Fig. 6, nuts 10 are attached by welding or the like to the upper surface of the upstream flange 8 in alignment with the bolt holes 8b, 8c and 8e.

As shown in Fig. 6, a tubular boss 8f extending perpendicularly upstream is formed by deep-drawing a central part of the upstream flange 8, an annular part 8g extends radially from the tubular boss 8f, and a taper part 8h having the shape of a truncated cone extends from the annular part 8g

The spherical joint 7 includes a downstream flange 11 formed by subjecting a sheet to press working. The downstream flange 11 is put on and welded to an upstream end part of the exhaust pipe 14. As shown in Fig. 6, the downstream flange 11 has a peripheral part 11a extending downstream substantially perpendicularly to a main part. A concave, spherical bearing part 11b concave toward the upstream side is formed in a central part of the downstream flange 11. The downstream flange 11 is provided with bolt holes 11c respectively corresponding to the bolt holes 8b of the upstream flange 8.

As shown in Fig. 6, a spherical gasket 12 is put on a downstream part 6a of the outer pipe 6 with its upstream end surface 12a in contact with the annular part 8g of the upstream flange 8. The concave, spherical bearing part 11b of the downstream flange 11 is in contact with a convex, spherical part 12b of the spherical gasket 12. The spherical gasket 12 is put on the downstream part 6a of the outer tube 6 corresponding to the annular gap C. Bolts 9 are passed through the bolt holes 11c of the downstream flange 11 from the downstream side toward the upstream side of the exhaust pipe 14, and are screwed in the nuts 10. Compression springs 13 are extended between the heads 9a of the bolts 9, and the downstream flange 11 to form the spherical joint 7.

A bolt 19 is passed through the bolt hole 8c of the upstream flange 8 and a bolt hole, not shown, formed in an upper end part of a stay 18, and is screwed in the nut 10 attached to the upstream flange 8 in alignment with the bolt hole 8c.

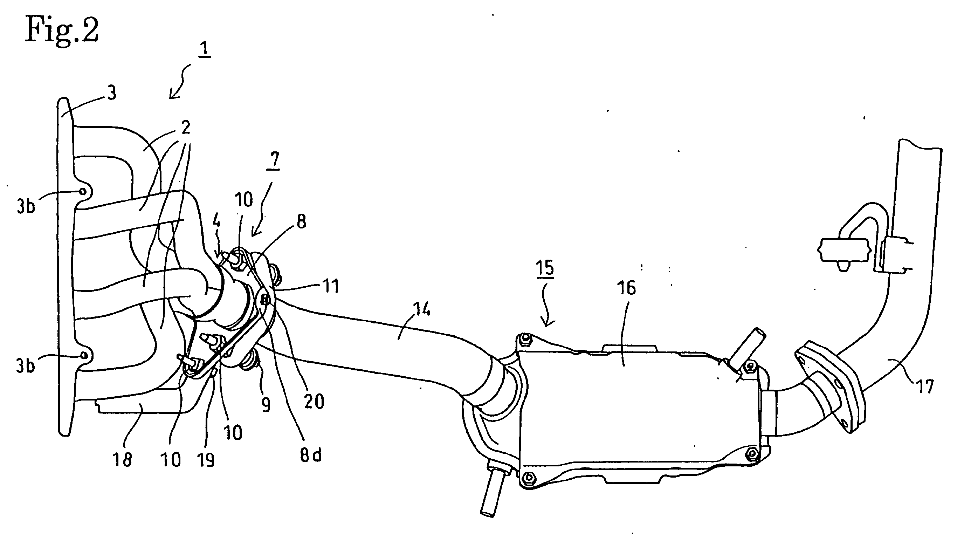

As shown in Fig. 2, the manifold flange 3 is provided in its upper edge part with two bolt holes 3b for fastening an exhaust manifold cover. As shown in Figs. 1 and 3, nuts 10 are attached to the manifold flange 3 in alignment with the bolt holes 3b. Bolts 20 are passed through the bolt holes of the exhaust manifold cover, not shown, and the bolt holes 3b of the manifold flange 3 and the bolt hole 8e of the upstream flange 8, and are screwed in the nuts 10 to hold the exhaust manifold cover, not shown, firmly on the manifold flange 3 and the upstream flange 8.

The exhaust manifold connecting structure in the embodiment shown in Figs. 1 to 7 holds the exhaust manifold 1 firmly and stably on the internal combustion engine, not shown, by the manifold flange 3 and the stay 18.

The internal combustion engine, not shown, and the catalytic converter 15 are mounted on the body of the vehicle. The spherical joint 7 is capable of smoothly absorbing change in its position due to the thermal expansion of the exhaust manifold 1 and the exhaust pipe 14 caused by the heat of a combustion gas flowing through the exhaust manifold 1 and the exhaust pipe 14.

Since a long part of the outer pipe 6 of the collecting pipe 4 is fitted in the tubular boss 8f of the upstream flange 8, and a long part of the outer pipe 6 is in engagement with the collecting pipe body 5, the upstream flange 8 is supported firmly on the collecting pipe 4.

Since the upstream end part of the outer pipe 6 and the upstream end of the tubular boss 8f of the upstream flange 8 are joined to the outer circumference of the collecting pipe body 5 by a weld W1, the outer pipe 6 does not need to be attached temporarily to the collecting pipe body 5, which reduces work and costs necessary for fabricating the exhaust manifold connecting structure.

Since the upstream flange 8 is formed from a sheet and has a large surface area, the taper part 8h having the shape of a truncated cone protrudes downstream, and the annular part 8g formed at the extremity of the taper part 8h is in contact with the spherical gasket 12, the upstream flange 8 is capable of satisfactorily radiating heat. Since the downstream part 6a of the outer tube 6 on which the spherical gasket 12 is put is separated from the collecting pipe body 5, heat is transferred to the spherical gasket 12 at a low heat transfer rate and hence thermal load on the spherical gasket 12 is small. Consequently, the durability of the spherical gasket 12 is improved greatly. The upstream flange 8 formed from a sheet by press working is lightweight, strong and rigid.

Since the upstream flange 8 is integrally provided with the manifold cover holding part 8d provided with the bolt hole 8e, the number of parts is reduced, which contributes to cutting the costs.

## Claims

1. An exhaust manifold connecting structure for a multicylinder internal combustion engine, comprising
a collecting pipe (4) collectively holding branch tubes (2) of an exhaust manifold (1) of the multicylinder internal combustion engine, said collecting pipe (4) being a double-wall pipe structure including a collecting pipe body (5) and an outer pipe (6) put on an outer surface of the collecting pipe body (5); and
a spherical joint (7) connecting said collecting pipe (4) and an exhaust pipe (14), said spherical joint (7) including an upstream flange (8), a downstream flange (11) connected to the exhaust pipe (14), and a spherical gasket (12) interposed between the upstream and downstream flanges (8, 11), wherein a tubular connecting part of said upstream flange (8) is tightly fitted to an outer surface of said outer pipe (6) and in tight contact with said spherical gasket (12);
**characterized in that**:
said upstream flange (8) is formed from a sheet material by press-working and comprises a tubular boss (8f) fitted on said outer surface of said outer pipe (6), an annular part (8g) extending radially from said annular boss (8f) and a taper part (8h) having a shape of a truncated cone and extending radially outwards from said annular part (8g) and
**in that** said collecting pipe body (5), said outer pipe (6) and said tubular boss (8f) of said upstream flange (8) are joined together with a weld (W1) formed in a single welding process.

2. The exhaust manifold connecting structure according to claim 1, wherein said taper part (8h) is bent toward an upstream side with respect to an exhaust direction.

3. The exhaust manifold connecting structure according to claim 1 or 2, wherein a peripheral part (8a, 8f) of said upstream flange (8) is bent toward an upstream side with respect to an exhaust direction.

4. The exhaust manifold connecting structure according to any of claims 1 to 3, wherein said upstream flange (8) has a part (8d) serving as a stay for holding an exhaust manifold cover.

5. The exhaust manifold connecting structure according to any of claims 1 to 4, wherein an annular space (C) is formed between said collecting pipe body (5) and a downstream part of said outer pipe (6).

6. The exhaust manifold connecting structure according to any of claims 1 to 5, wherein said collecting pipe body (5), said outer pipe (6) and said connecting part of said upstream flange (8) are welded together at respective upstream ends thereof.

## Patentansprüche

1. Auspuffkrümmerverbindungsstruktur für eine Brennkraftmaschine mit mehreren Zylindern, umfassend:
ein Sammelrohr (4), welches gemeinsam Verzweigungsröhren (2) eines Auspuffkrümmers (1) der Brennkraftmaschine mit mehreren Zylindern hält, wobei das Sammelrohr (4) eine doppelwandige Rohrstruktur ist, welche einen Sammelrohrkörper (5) und ein auf eine Außenfläche des Sammelrohrkörpers (5) aufgesetztes Außenrohr (6) aufweist, und
ein Kugelgelenk (7), welches das Sammelrohr (4) und ein Auspuffrohr (14) verbindet, wobei das Kugelgelenk (7) einen stromaufwärts liegenden Flansch (8), einen mit dem Auspuffrohr (14) verbundenen stromabwärts liegenden Flansch (11) sowie eine zwischen dem stromaufwärts liegenden und dem stromabwärts liegenden Flansch (8, 11) angeordnete kugelförmige Dichtung (12) umfasst, wobei ein röhrenförmiger Verbindungsteil des stromaufwärts liegenden Flansches (8) festsitzend an einer Außenfläche des Außenrohrs (6) befestigt ist und sich in festsitzendem Kontakt mit der kugelförmigen Dichtung (12) befindet,
**dadurch gekennzeichnet, dass**:
der stromaufwärts liegende Flansch (8) aus einem Blechmaterial durch Druckumformen gebildet ist und einen röhrenförmigen Ansatz (8f) aufweist, welcher an der Außenfläche des Außenrohrs (6) befestigt ist, einen ringförmigen Teil (8g) aufweist, der sich von dem ringförmigen Ansatz (8f) aus radial erstreckt, sowie einen sich verjüngenden Teil (8h) aufweist, der die Form eines Kegelstumpfes besitzt und sich von dem ringförmigen Teil (8g) radial nach außen erstreckt, und
dass der Sammelrohrkörper (5), das Außenrohr (6) und der ringförmige Ansatz (8f) des stromaufwärts liegenden Flansches (8) miteinander mittels einer in einem einzigen Schweißprozess ausgebildeten Verschweißung (W1) verbunden sind.

2. Auspuffkrümmerverbindungsstruktur nach Anspruch 1, wobei der sich verjüngende Teil (8h) bezüglich einer Abgasrichtung zu einer stromaufwärts liegenden Seite gebogen ist.

3. Auspuffkrümmerverbindungsstruktur nach Anspruch 1 oder 2, wobei ein Umfangsteil (8a, 8f) des stromaufwärts liegenden Flansches (8) bezüglich einer Abgasrichtung zu einer stromaufwärts liegenden Seite gebogen ist.

4. Auspuffkrümmerverbindungsstruktur nach einem der Ansprüche 1 bis 3, wobei der stromaufwärts liegende Flansch (8) einen Teil (8d) aufweist, der als eine Strebe zum Halten einer Auspuffkrümmerabdeckung dient.

5. Auspuffkrümmerverbindungsstruktur nach einem der Ansprüche 1 bis 4, wobei ein ringförmiger Raum (C) zwischen dem Sammelrohrkörper (5) und einem stromabwärts liegenden Teil des Außenrohrs (6) gebildet ist.

6. Auspuffkrümmerverbindungsstruktur nach einem der Ansprüche 1 bis 5, wobei der Sammelrohrkörper (5), das Außenrohr (6) und der Verbindungsteil des stromaufwärts liegenden Flansches (8) an jeweiligen stromaufwärts liegenden Enden derselben miteinander verschweißt sind.

## Revendications

1. Structure de raccordement d'une partie de collecteur d'échappement de moteur à combustion interne à plusieurs cylindres, comprenant
un tuyau collecteur (4) supportant collectivement des tubes de raccordement (2) d'une partie de collecteur d'échappement (1) du moteur à combustion interne à plusieurs cylindres, ledit tuyau collecteur (4) étant une structure de tuyau à double paroi comprenant un corps de tuyau collecteur (5) et un tuyau externe (6) disposé sur une surface externe du corps de tuyau collecteur (5) ; et
un joint sphérique (7) raccordant ledit tuyau collecteur (4) et un tuyau d'échappement (14), ledit joint sphérique (7) comprenant un flasque amont (8), un flasque aval (11) raccordés au tuyau d'échappement (14), et un joint d'étanchéité sphérique (12) interposé entre les flasques amont et aval (8, 11), dans lequel une partie de raccordement tubulaire dudit flasque amont (8) est fermement fixée sur une surface externe dudit tuyau externe (6) et est en contact étroit avec ledit joint d'étanchéité sphérique (12) ;
**caractérisée en ce que** :
ledit flasque amont (8) est formé à partir d'une feuille obtenue grâce à un travail à la presse et comprend un moyeu tubulaire (8f) fixé sur ladite surface externe dudit tuyau externe (6), une partie annulaire (8g) se prolongeant de manière radiale à partir dudit moyeu annulaire (8f) et une pièce biseautée (8h) ayant la forme d'un cône tronqué et s'étendant de manière radiale vers l'extérieur à partir de ladite partie annulaire (8g) et dans ledit corps de tuyau collecteur (5), ledit tuyau externe (6) et ledit moyeu tubulaire (8f) dudit flasque amont (8) sont raccordés avec un cordon de soudure (W1) formé en une seule opération de soudage.

2. Structure de raccordement d'une partie de collecteur d'échappement selon la revendication 1, dans laquelle ladite pièce biseautée (8h) est inclinée du côté amont par rapport à une direction d'échappement.

3. Structure de raccordement d'une partie de collecteur d'échappement selon la revendication 1 ou 2, dans laquelle une partie périphérique (8a, 8f) dudit flasque amont (8) est inclinée du côté amont par rapport à une direction d'échappement.

4. Structure de raccordement d'une partie de collecteur d'échappement selon l'une quelconque des revendications 1 à 3, dans laquelle ledit flasque amont (8) a une partie (8d) servant de support pour tenir une couverture de collecteur d'échappement.

5. Structure de raccordement d'une partie de collecteur d'échappement selon l'une quelconque des revendications 1 à 4, dans laquelle un espace annulaire (c) est formé entre ledit corps de tuyau collecteur (5) et une partie aval dudit tuyau externe (6).

6. Structure de raccordement d'une partie de collecteur d'échappement selon l'une quelconque des revendications 1 à 5, dans laquelle ledit corps de tuyau collecteur (5), ledit tuyau externe (6) et ladite partie de raccordement dudit flasque amont (8) sont soudés ensemble au niveau de leurs extrémités amont respectives.
